# EUROPÄISCHE PATENTSCHRIFT

(11) **EP 3 156 760 B1**
(45) Veröffentlichungstag und Bekanntmachung des Hinweises auf die Patenterteilung: **10.07.2019**
(21) Anmeldenummer: 15189812.9
(22) Anmeldetag: 14.10.2015
(51) Int. Cl.: G01B 11/245, G01B 11/24, G01B 11/12, G01B 11/02, G01B 11/00

(54) **SENSORVORRICHTUNG UND VERFAHREN ZUR OBERFLÄCHENUNTERSUCHUNG EINES ZYLINDRISCHEN HOHLRAUMS**
SENSOR DEVICE AND METHOD FOR SURFACE INSPECTION OF A CYLINDRICAL CAVITY
DISPOSITIF CAPTEUR ET PROCEDE D'INSPECTION DE SURFACE D'UN ESPACE CREUX CYLINDRIQUE

(43) Veröffentlichungstag der Anmeldung: 19.04.2017
(73) Patentinhaber: Sturm Maschinen- & Anlagenbau GmbH, 94330 Salching (DE)
(72) Erfinder: Dr. Ullrich, Wolfgang, 82319 Starnberg (DE); Janetzki, Wolfgang, 82340 Feldafing (DE); Klinger, Philip, 80634 München (DE); Bader, Florian, 82380 Peißenberg (DE)
(74) Vertreter: Wunderlich & Heim Patentanwälte Partnerschaftsgesellschaft mbB

(56) Entgegenhaltungen:
- DE-A1-102008 050 259
- DE-A1-102012 204 498
- DE-A1-102013 003 640
- DE-A1-102014 201 531
- US-A1- 2007 153 296
- US-A1- 2010 220 369
- US-B1- 6 462 815

## Beschreibung

Die vorliegende Offenbarung bezieht sich in einem ersten Aspekt auf eine Sensorvorrichtung zur Oberflächenuntersuchung eines zylindrischen Hohlraums. In einem weiteren Gesichtspunkt betrifft die Offenbarung ein Verfahren zur Oberflächenuntersuchung eines zylindrischen Hohlraums.

Bei dem zylindrischen Hohlraum kann es sich prinzipiell um einen beliebigen Hohlraum mit rundem Querschnitt handeln, wobei der runde Querschnitt nicht zwangsweise eine präzise Kreisform haben muss. Über eine Höhe des zylindrischen Hohlraums muss dieser nicht exakt den gleichen Querschnitt haben. Insbesondere kann der zylindrische Hohlraum eine sich verjüngende Form haben und/oder eine unebene Oberfläche.

Bei den zu untersuchenden zylindrischen Hohlräumen kann es sich insbesondere um Arbeitszylinder handeln, beispielsweise um Zylinderbohrungen in einem Motorblock eines Verbrennungsmotors oder um Arbeitszylinder eines Servomotors.

Insbesondere bei solchen zylindrischen Hohlräumen sollen geometrische Eigenschaften sehr präzise mit Vorgaben übereinstimmen. Um dies zu überprüfen, können Oberflächenuntersuchungen an einem zylindrischen Hohlraum erfolgen, insbesondere zur Bestimmung eines Durchmessers des zylindrischen Hohlraums und von Unebenheiten der Oberfläche des zylindrischen Hohlraums.

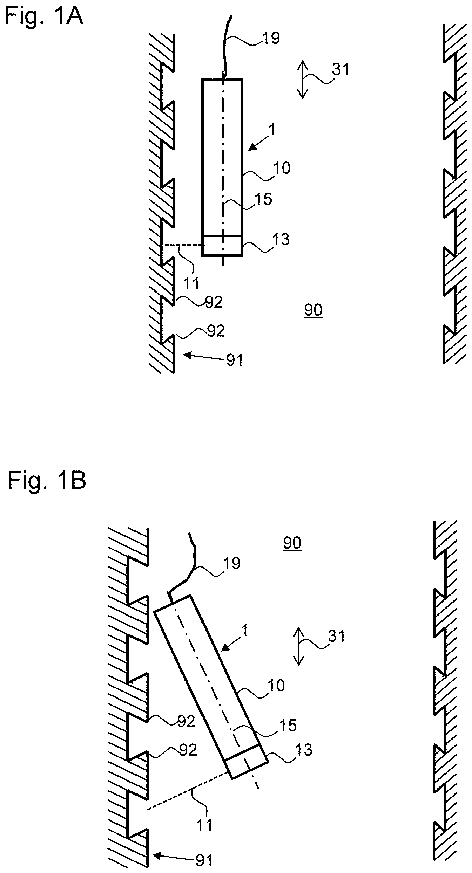

Eine Sensorvorrichtung der oben genannten Art ist beispielsweise von der Anmelderin in der europäischen Patentanmeldung mit der Anmeldenummer 15151723 beschrieben. Zudem wird solch eine Sensorvorrichtung auch im Späteren mit Bezug auf die Figuren 1A und 1B erläutert. Bekannte Sensorvorrichtungen können zwar gewisse geometrische Eigenschaften, wie beispielsweise den Durchmesser, eines zylindrischen Hohlraums präzise ermitteln. Eigenschaften einer nicht-glatten Oberfläche können aber nur in eingeschränktem Umfang bestimmt werden.

Zudem ist in der US 2010/0220369 A1 ein Scanningsystem zum berührungslosen Abtasten einer Oberfläche beschrieben, das Licht parallel und senkrecht zu einer Längsachse des Systems aussendet und empfängt.

Aus der DE 10 2014 201 531 A1 ist eine Vorrichtung zum Vermessen einer Zylinderlauffläche einer Brennkraftmaschine bekannt. Bei dieser Vorrichtung ist neben einer Sende- und Empfangseinheit für Licht eine Tasteinheit zum Ablenken des ausgesandten und reflektierten Lichtstrahls vorgesehen.

Daneben ist in der DE 10 2012 204 498 A1 eine Vorrichtung mit einer Kamera und einer Punklichtquelle offenbart. Mittels der Bildlage eines von der Lichtquelle erzeugten Lichtpunkts auf einer Rohrinnenoberfläche wird die Kamera automatisch verschwenkt. US 2007/153296 A1, US 6 462 815 B1 und DE 10 2008 050259 A1 offenbaren weitere Sensorvorrichtungen zur Oberflächenuntersuchung.

Als eine **Aufgabe** der Erfindung kann erachtet werden, ein Verfahren und eine Sensorvorrichtung zur Oberflächenuntersuchung eines zylindrischen Hohlraums anzugeben, mit denen unebene Oberflächen des Hohlraums möglichst präzise vermessen werden können.

Diese Aufgabe wird durch die Sensorvorrichtung mit den Merkmalen des Anspruchs 1 sowie durch das Verfahren mit den Merkmalen des Anspruchs 10 gelöst.

Eine erfindungsgemäße Sensorvorrichtung zur Oberflächenuntersuchung eines solchen zylindrischen Hohlraums umfasst mindestens zwei Sensoreinheiten, welche für eine optische konfokale Abstandsmessung eingerichtet ist. Die mindestens zwei Sensoreinheiten haben eine längliche Form und weisen eine äußere Optik auf, durch welche eine Messrichtung, in welcher Licht aussendbar und empfangbar ist, quer zu einer Längsachse dieser Sensoreinheit steht. Zudem umfasst die Sensorvorrichtung eine Bewegungseinrichtung, die dazu eingerichtet ist, die mindestens zwei Sensoreinheiten in einer Bewegungsrichtung in einen zu untersuchenden zylindrischen Hohlraum ein- und auszufahren.

In entsprechender Weise umfasst ein erfindungsgemäßes Verfahren zur Oberflächenuntersuchung eines zylindrischen Hohlraums zumindest die folgenden Schritte: Einfahren mindestens zweier Sensoreinheiten entlang einer Bewegungsrichtung in einen zu untersuchenden zylindrischen Hohlraum; Durchführen von optischen konfokalen Abstandsmessungen durch die mindestens zwei Sensoreinheiten, welche für die optische konfokale Abstandsmessung über eine äußere Optik Licht in einer Messrichtung aussenden und Licht aus der Messrichtung empfangen; wobei die mindestens zwei Sensoreinheiten eine längliche Form haben und die Messrichtung quer zu einer Längsachse der Sensoreinheiten steht; und Herausfahren der mindestens zwei Sensoreinheiten entlang der Bewegungsrichtung aus dem zu untersuchenden zylindrischen Hohlraum.

Bei der vorgenannten Sensorvorrichtung ist gemäß der Erfindung vorgesehen, dass zur Vermessung von Vorsprüngen/Erhebungen einer Oberfläche des zylindrischen Hohlraums Steuermittel vorhanden und dazu eingerichtet sind, die mindestens zwei Sensoreinheiten zum Durchführen einer ersten Abstandsmessung anzusteuern, bei welcher die Messrichtung relativ zur Bewegungsrichtung in einem Winkel von 20° bis 85° steht, insbesondere 30° bis 60°, und die mindestens zwei Sensoreinheiten zum Durchführen einer zweiten Abstandsmessung anzusteuern, bei welcher die Messrichtung relativ zur Bewegungsrichtung in einem Winkel von 95° bis 160°, insbesondere 120° bis 150°, steht. Hierzu kann einerseits vorgesehen sein, dass die Messrichtung einer Sensoreinheit in einem Winkel zwischen 95° und 175°, insbesondere zwischen 105° und 150°, zur Längsachse dieser Sensoreinheit steht (die äußere Optik der Sensoreinheit ist also so gestaltet, dass die Messrichtung dieser Sensoreinheit den vorgenannten Winkel bildet), und diese Sensoreinheit ist über eine drehbare Lagerung gehalten, so dass dieselbe Sensoreinheit für die erste Abstandsmessung und die zweite Abstandsmessung in verschiedene Drehpositionen bewegbar ist. Beispielsweise kann die Sensoreinheit so gestaltet sein, dass ihre Messrichtung in einem Winkel von 130° zur Längsachse steht. Ist die Längsachse parallel zur vorgenannten Bewegungsrichtung ausgerichtet, steht die Messrichtung auch zur Bewegungsrichtung in einem Winkel von 130°. Wird nun die Sensoreinheit um beispielsweise 80° von der benachbarten Oberfläche des zu untersuchenden Hohlraums weggeneigt (das heißt ein zur äußeren Optik entferntes Ende der Sensoreinheit wird von der benachbarten Oberfläche weggeneigt), so ergibt sich ein Winkel von 130°-80°=50° zwischen der Messrichtung und der Bewegungsrichtung.

Erfindungsgemäß umfassen die mindestens zwei Sensoreinheiten zumindest eine erste und eine zweite Sensoreinheit, wobei die erste Sensoreinheit (zur Ausführung der ersten Abstandsmessung) so gestaltet und mit der Bewegungseinrichtung verbunden ist, dass ihre Messrichtung relativ zur Bewegungsrichtung in einem Winkel von 20° bis 85°, insbesondere 30° bis 60°, steht. Die zweite Sensoreinheit ist dabei (zur Ausführung der zweiten Abstandsmessung) so gestaltet und mit der Bewegungseinrichtung verbunden, dass ihre Messrichtung relativ zur Bewegungsrichtung in einem Winkel von 95° bis 170°, insbesondere zwischen 105° und 150°, steht.

Bei dem Verfahren der oben genannten Art ist erfindungsgemäß vorgesehen, dass das Durchführen der optischen konfokalen Abstandsmessungen zumindest umfasst:
- Durchführen einer ersten Abstandsmessung durch die mindestens zwei Sensoreinheiten zur Vermessung von Erhebungen einer Oberfläche des zylindrischen Hohlraums, wobei die Messrichtung bei der ersten Abstandsmessung relativ zur Bewegungsrichtung in einem Winkel von 20° bis 85° insbesondere 30° bis 60°, steht,
- Durchführen einer zweiten Abstandsmessung durch die mindestens zwei Sensoreinheit zur Vermessung von Erhebungen einer Oberfläche des zylindrischen Hohlraums, wobei die Messrichtung bei der zweiten Abstandsmessung relativ zur Bewegungsrichtung in einem Winkel von 95° bis 160°, insbesondere 120° bis 150°, steht,
wobei zum Bereitstellen der zur ersten und zweiten Abstandsmessung genannten Winkel:
- die mindestens zwei Sensoreinheiten zumindest eine erste und eine zweite Sensoreinheit umfassen,
   wobei die erste Sensoreinheit so gestaltet und mit der Bewegungseinrichtung verbunden ist, dass ihre Messrichtung relativ zur Bewegungsrichtung in einem Winkel von 20° bis 85°, insbesondere 30° bis 60°, steht, und
   wobei die zweite Sensoreinheit so gestaltet und mit der Bewegungseinrichtung verbunden ist, dass ihre Messrichtung relativ zur Bewegungsrichtung in einem Winkel von 95° bis 170°, insbesondere zwischen 105° und 150°, steht.

Durch die Erfindung können nicht-glatte Oberflächen, das heißt Vorsprünge oder Erhebungen/Vertiefungen an einer Oberfläche eines zylindrischen Hohlraums, effektiv vermessen werden. Die Vorsprünge können insbesondere nicht nur in radialer Richtung in den zylindrischen Hohlraum hineinragen, sondern können zusätzlich auch in Längsrichtung des zylindrischen Hohlraums geneigt sein und insbesondere eine haken- oder schwalbenschwanzförmige Gestalt haben. Eine solche Oberflächenform wird beispielsweise bei zylindrischen Hohlräumen in einem Motorblock erzeugt. Ein Vorteil einer solchen Form liegt darin, dass eine aufzutragende Beschichtung eine höhere Haftzugsfestigkeit erhält. Das Erzeugen dieser nicht-glatten Oberfläche wird in diesem Zusammenhang auch als Aktivierung bezeichnet. Im Rahmen der vorliegenden Beschreibung ist es unerheblich, ob eine nicht-glatte Oberfläche durch Erhebungen auf einem Untergrund beschrieben wird, oder stattdessen von Vertiefungen in einem Untergrund die Rede ist. Beide Formulierungen können dieselbe Oberflächenform betreffen.

Ein wesentlicher Gedanke der Erfindung kann darin gesehen werden, dass die oben beschriebenen Vorsprünge/Erhebungen besser untersucht werden können, wenn die Messrichtung einer verwendeten Sensoreinheit nicht senkrecht auf die zu untersuchende Oberfläche des zylindrischen Hohlraums steht. Geneigte Vorsprünge, die beispielsweise einen Winkel von 15° zu einer Senkrechten auf die Oberfläche bilden, können besonders gut vermessen werden, wenn auch die Messrichtung der Sensoreinheit in einem Winkel zwischen 10° und 20° zu einer Senkrechten der Oberfläche ausgerichtet ist. Insbesondere bei zu beschichtenden Arbeitszylindern wird eine Oberflächenform gebildet, bei welcher nach innen in den Hohlraum ragende Vorsprünge sich auch in axialer Richtung des Hohlraums erstrecken und an ihren Enden in axialer Richtung einen Überhang bilden. Es wurde erkannt, dass für eine präzise Vermessung einer solchen Geometrie eine einzige Messrichtung relativ zur Oberfläche nicht genügt. Vielmehr sind zumindest zwei Messrichtungen sinnvoll, welche beispielsweise in einem Winkel von +15° und -15° zu einer Normalen der zu untersuchenden Oberfläche stehen.

Diese Problematik wird näher mit Bezug auf die Figuren 1A und 1B beschrieben. Fig. 1A zeigt schematisch eine nicht erfindungsgemäße Untersuchung eines zylindrischen Hohlraums 90. Dieser umfasst eine Oberfläche 91, welche mechanisch bearbeitet (aktiviert) wurde, damit der Halt für eine aufzutragende Beschichtung verbessert wird. Dadurch umfasst die Oberfläche 91 Erhebungen oder Vorsprünge 92 mit einem schwalbenschwanzförmigen Querschnitt. Diese Erhebungen 92 stehen nicht etwa senkrecht von einem Untergrund der Oberfläche 91 hervor, sondern unter einem Winkel, wie dargestellt. Es ist wünschenswert, die Abmessungen dieser überstehenden Erhebungen 92 möglichst präzise zu messen. In Fig. 1A ist eine Sensorvorrichtung 1 des Stands der Technik dargestellt, welcher eine Sensoreinheit 10 umfasst. Diese arbeitet nach dem konfokalen Prinzip und kann so in einer Messrichtung 11 präzise einen Abstand messen. Die Messrichtung 11 wird durch eine äußere Optik 13 der Sensoreinheit 10 festgelegt, indem über diese Optik 13 Licht in Messrichtung 11 ausgesendet und aus der Messrichtung 11 kommendes Licht in Richtung eines Lichtdetektors der Sensorvorrichtung 1 weitergeleitet wird. Hierzu kann Licht über eine optische Faser 19 zu der Sensoreinheit 10 hin und/oder von dieser weg geleitet werden. Bei der dargestellten herkömmlichen Sensorvorrichtung 1 steht die Messrichtung 11 senkrecht zu einer Längsachse 15 der Sensoreinheit 10. Zudem steht die Messrichtung 11 senkrecht zu einer Bewegungsrichtung 31, entlang welcher die Sensoreinheit 10 in dem Hohlraum 90 verfahren wird. Wie aus Fig. 1A erkennbar, kann bei einer Messrichtung 11, die senkrecht auf die zu untersuchende Oberfläche 91 steht, kaum eine Information über die Neigung und Form des überstehenden Bereichs einer Erhebung 92 gewonnen werden.

Es ist denkbar, die Sensoreinheit 10 zu verkippen, damit die Messrichtung 11 nicht mehr senkrecht auf die Oberfläche 91 steht und so auch hinter überstehende Erhebungen 91 blicken kann. Eine solche Situation ist schematisch in Fig. 1B dargestellt. Bei einer solchen Verkippung der Sensoreinheit 10 vergrößert sich jedoch der Abstand der äußeren Optik 13 zur zu untersuchenden Oberfläche 91, weil ansonsten ein Ende der länglichen Sensoreinheit 10, welches zu der äußeren Optik 13 das gegenüber liegende Ende bildet (in Fig. 1B das obere Ende der Sensoreinheit 10) gegen die Oberfläche 91 stoßen würde. Konfokale Abstandssensoren haben zwar eine sehr hohe Messauflösung, dafür jedoch auch nur einen verhältnismäßig kleinen Messbereich. Durch die in Fig. 1B dargestellte Verkippung liegt der Abstand der äußeren Optik 13 zur Oberfläche 91 außerhalb des Messbereichs der Sensoreinheit 10. Daher kann die Sensoreinheit 10 in der dargestellten Position keine sinnvolle Messung ausführen.

Dieses Problem wird durch die erfindungsgemäße Sensorvorrichtung überwunden. Gemäß der Erfindung können bereits zwei Sensoreinheiten genügen. Bei diesen darf die Messrichtung jedoch nicht senkrecht zur Längsachse einer Sensoreinheit stehen. Vielmehr bildet die Messrichtung einen Winkel zwischen 100° und 250° zur Längsachse der Sensoreinheit. Dabei ist dieser Winkel an der äußeren Optik relativ zur Längsachse gemessen, welche von der äußeren Optik in Richtung eines Mittenbereichs der Sensoreinheit läuft. Ein Winkel von 180° gibt demnach an, dass die Messrichtung von der äußeren Optik aus gerade von der Sensormitte weg zeigt. Ein Winkel von 0° würde hingegen bedeuten, dass die Messrichtung von der äußeren Optik in die Sensoreinheit hinein zu deren Mittenbereich verlaufen würde. Durch die vorgenannte Neigung zwischen der Messrichtung und der Längsachse der Sensoreinheit wird erreicht, dass diese in zwei verschiedenen Drehpositionen Erhebungen einer Oberfläche eines zylindrischen Hohlraums untersuchen kann, ohne dass es zu Kollisionen mit der Oberfläche käme oder ein Messbereich der konfokalen Sensoreinheit verlassen würde.

Erfindungsgemäß ist es vorgesehen, dass mindestens zwei Sensoreinheiten vorhanden sind, die sich in ihrer Messrichtung unterscheiden. Die beiden Messrichtungen können insbesondere so gewählt sein, dass keine Verkippung oder Drehung der Sensoreinheit erforderlich ist, um überstehende Erhebungen der Oberfläche eines zylindrischen Hohlraums effektiv zu vermessen. Eine Winkelvorgabe für die Messrichtung kann hierbei relativ zur Bewegungsrichtung definiert werden, in welcher die beiden Sensoreinheiten in einen zu untersuchenden Hohlraum ein- und ausfahrbar sind. Die Bewegungsrichtung ist eine bedeutsame Bezugsgröße, da im Betrieb ein zu untersuchender zylindrischer Hohlraum zweckmäßigerweise so angeordnet wird, dass seine Längsachse gerade mit der Bewegungsrichtung übereinstimmt. Dadurch wird sichergestellt, dass die Sensoreinheit oder die Sensoreinheiten über die Höhe des zylindrischen Hohlraums hinweg vergleichbare Ergebnisse liefern kann und auch stets der beschränkte Messbereich der konfokalen Abstandsmessung eingehalten wird.

Eine konfokale Abstandsmessung kann allgemein dadurch definiert sein, dass die Sensoreinheit eine Optik, beispielsweise eine Sammellinse, eine Linsengruppe mit insgesamt positiver Brechkraft oder reflektierende Mittel wie zum Beispiel Spiegel mit lichtsammelnder Wirkung hat, über welche sowohl auszusendendes Licht in Richtung der zu untersuchenden Oberfläche ausgestrahlt wird, als auch von der zu untersuchenden Oberfläche zurückkommendes Licht in Richtung des Lichtdetektors weitergeleitet wird. Vorteilhafterweise stimmt dadurch ein Beleuchtungsfokus gerade mit einem Detektionsfokus überein. Zwischen der vorgenannten Optik, die auch als Konfokaloptik bezeichnet werden kann, und dem Lichtdetektor kann außerdem in einer Zwischenbildebene eine Lochblende (englisch: pinhole) angeordnet sein. Diese Lochblende blockiert außerfokales Licht, so dass der Lichtdetektor im Wesentlichen nur aus dem Bereich des Beleuchtungsfokus Licht empfangen kann. Anstelle einer Lochblende kann auch eine Lichtleitfaser in der Zwischenbildebene angeordnet sein, welche ähnlich wie eine Lochblende hinsichtlich der Lichtweiterleitung wirkt. Auch zwischen der Lichtquelle und der Konfokaloptik kann eine Lochblende in einer Zwischenbildebene angeordnet sein. Anstelle oder zusätzlich zur Lochblende kann wiederum ein optischer Wellenleiter, der Licht der Lichtquelle leitet genutzt werden. Dabei ist dasjenige Ende dieses optischen Wellenleiters, welches der äußeren Optik zugewandt ist, in einer Zwischenbildebene angeordnet. Durch diese konfokale Arbeitsweise wird eine besonders hohe Messauflösung erreicht. Diese ist besser als eine Auflösung anderer optischer Abstandsmesser, die zum Beispiel nach dem Triangulationsprinzip arbeiten.

Damit nachzuweisendes Licht von der Konfokaloptik nicht in Richtung der Lichtquelle, sondern in Richtung des Lichtdetektors läuft, ist zweckmäßigerweise ein Strahlteiler vorhanden. Dieser leitet nachzuweisendes Licht zumindest teilweise von der Konfokaloptik zum Lichtdetektor und Beleuchtungslicht zumindest teilweise von der Lichtquelle zur Konfokaloptik. Als Strahlteiler kann beispielsweise ein teildurchlässiger Spiegel, ein Polarisationsstrahlteiler oder ein Farbteiler, welcher wellenlängenabhängig Licht transmittiert oder reflektiert, verwendet werden.

Die Konfokaloptik kann grundsätzlich identisch mit der äußeren Optik sein, ist vorzugsweise aber von dieser verschieden. Dadurch kann die äußere Optik in einfacherer Weise an eine gewünschte Aufgabe angepasst oder für diese ausgetauscht werden. So legt die äußere Optik die Messrichtung fest, in welcher Licht ausgesendet und auch empfangen wird. Die äußere Optik kann ein prinzipiell beliebiges optisches Element sein, beispielsweise ein lichtbrechendes, ein lichtbeugendes oder ein lichtreflektierendes Element, oder kann ein oder mehrere der vorgenannten Elemente umfassen.

Die Messrichtung kann eine Achse eines Strahlengangs bezeichnen, entlang welcher Licht von der äußeren Optik ausgesendet wird. Üblicherweise wird Licht kegelförmig ausgesendet, wobei die Kegelform einen Öffnungswinkel zur Messrichtung bildet und die Messrichtung mittig durch die Kegelform verläuft. Ein Aussenden von Licht in Messrichtung kann demnach so verstanden werden, dass Licht kegelförmig um die Messrichtung ausgesendet wird. Entlang der Messrichtung wird an einem bestimmten Abstand zur äußeren Optik ein Fokus mit minimalem Lichtstrahlquerschnitt erzeugt, welcher insbesondere durch die Fokaloptik vorgegeben sein kann.

Für jede Sensoreinheit können jeweils eine Lichtquelle und jeweils mindestens ein Lichtdetektor vorgesehen sein. Die Lichtquelle und der Lichtdetektor können innerhalb des länglichen Körpers der Sensoreinheit aufgenommen sein. Alternativ befinden sich die Lichtquelle und der Lichtdetektor außerhalb vom länglichen Körper der Sensoreinheit. Über optische Wellenleiter kann sodann Licht von der Lichtquelle zum länglichen Körper und dort über die Konfokaloptik zur äußeren Optik geleitet werden. In umgekehrter Richtung kann nachzuweisendes Licht über die äußere Optik zur Konfokaloptik und weiter über den oder die optische Wellenleiter zum Lichtdetektor geleitet werden.

Bei einer Konfokalmessung wird durch ausgesendetes Licht ein Bereich auf einer Oberfläche des zylindrischen Hohlraums beleuchtet. Von dem beleuchteten Bereich zurückgeworfenes Licht, insbesondere gestreutes und/oder reflektiertes Licht, wird vom Lichtdetektor gemessen. Dieser braucht keine räumliche Auflösung zu haben. Der Lichtdetektor muss also keine Kamera sein, sondern kann insbesondere aus einem einzigen lichtsensitiven Element bestehen. Somit wird für den beleuchteten Bereich genau 1 Messwert erzeugt, im Gegensatz zu einer Weitfeldbeleuchtung mit räumlich auflösendem Lichtdetektor, welcher für 1 beleuchteten Bereich entsprechend der Anzahl seiner Empfangselemente zahlreiche Messwerte erzeugt. Gegenüber einer solchen Weitfeldbeleuchtung bietet die bei der Erfindung genutzte konfokale Messung über deutlich höhere Messgenauigkeit, insbesondere hinsichtlich Abstandsinformationen.

Die längliche Form einer Sensoreinheit kann so verstanden werden, das ein Gehäuse oder äußere Abmessungen dieser Sensoreinheit mindestens doppelt oder dreimal so groß ist wie eine Abmessung in einer Richtung senkrecht dazu. Als Längsachse wird eine Achse bezeichnet, die sich entlang der länglichen Form erstreckt, also insbesondere in der Richtung, in welcher die Sensoreinheit ihre größte Abmessung hat. Stirnseiten der länglichen Form können insbesondere an einer Seite durch die äußere Optik und auf der gegenüberliegenden Seite durch Anschlussmittel für ein oder mehrere Lichtleitfasern bestimmt sein.

Um die mindestens zwei Sensoreinheiten in eine Messposition zu bringen, wird eine Bewegungseinrichtung verwendet. Diese kann prinzipiell beliebig gestaltet sein, sofern sie dazu in der Lage ist, die mindestens zwei Sensoreinheiten in einer bestimmten, insbesondere linearen, Bewegungsrichtung zu verfahren. Diese Bewegungsrichtung kann mit einer Längsachse eines zu untersuchenden zylindrischen Hohlraums übereinstimmen. Die Bewegungseinrichtung kann auch dazu gestaltet sein, die mindestens zwei Sensoreinheiten zusätzlich in Richtungen quer oder senkrecht zur genannten Bewegungsrichtung zu verfahren. Dies kann wünschenswert sein, um die mindestens zwei Sensoreinheiten zunächst über einem zu untersuchenden zylindrischen Hohlraum zu positionieren und sodann die mindestens zwei Sensoreinheiten in Bewegungsrichtung in den zylindrischen Hohlraum einzufahren. Zweckmäßigerweise umfasst die Bewegungseinrichtung hierfür mindestens einen Antrieb, beispielsweise einen Motor, einen magnetischen Linearantrieb oder ein anderes Stellelement.

Bei einer bevorzugten Ausgestaltung der erfindungsgemäßen Sensorvorrichtung ist die erste Sensoreinheit, insbesondere ihre äußere Optik, so gestaltet, dass ihre Messrichtung relativ zu ihrer Längsachse in einem Winkel zwischen 20° und 85°, insbesondere zwischen 30° und 80°, steht. Weiterhin kann hier die zweite Sensoreinheit, insbesondere ihre äußere Optik, so gestaltet sein, dass ihre Messrichtung relativ zu ihrer Längsachse in einem Winkel zwischen 95° und 160°, insbesondere zwischen 100° und 150°, steht.

Die äußere Optik einer Sensoreinheit kann zweckmäßigerweise in Längsrichtung in einem Endbereich der zugehörigen Sensoreinheit angeordnet sein. Winkelangaben können im gesamten vorliegenden Text so zu verstehen sein, dass bei einem Winkel von 0° zur Längsrichtung die Messrichtung in die Sensoreinheit hinein zeigen würde und bei einem Winkel von 180° in Längsrichtung aus der Sensoreinheit hinaus zeigen würde. Durch zwei Sensoreinheiten, deren Messrichtungen bezüglich ihrer Längsachsen unterschiedlich gebildet sind, können Erhebungen an Zylinderoberflächenwänden, wie sie insbesondere für Verbrennungsmotoren produziert werden, besonders gut untersucht werden. Außerdem wird durch die vorgenannten Winkelbereiche erreicht, dass eine Längsabmessung einer Sensoreinheit nicht oder nur kaum hinderlich ist beim Einführen der Sensoreinheit in einen zu untersuchenden Hohlraum.

Auch kann vorgesehen sein, dass die erste und die zweite Sensoreinheit mit ihren Längsachsen im Wesentlichen parallel zueinander angeordnet sind und ihre Längsachsen im Wesentlichen parallel zur Bewegungsrichtung ausgerichtet sind. Unter "im Wesentlichen parallel" können Winkel bis 15° oder vorzugsweise bis 5° angesehen werden. Sind die Sensoreinheiten parallel zueinander und parallel zur Bewegungsrichtung ausgerichtet, so ist ihr Platzbedarf im Hinblick auf einen Querschnitt des zu untersuchenden Hohlraums besonders gering. Dies ist vorteilhaft, sofern die Sensorvorrichtung über weitere Sensoren verfügen soll, die ebenfalls in den zylindrischen Hohlraum eingefahren werden.

Bei einer bevorzugten Ausgestaltung sind die erste und die zweite Sensoreinheit gleich gebildet und zueinander gedreht angeordnet. Insbesondere können hier die beiden Sensoreinheiten bis auf ihre Drehausrichtung identisch sein. Dies vereinfacht die Herstellung. Diese Drehung zwischen den Sensoreinheiten kann um eine Achse gegeben sein, welche quer oder senkrecht zur vorgenannten Bewegungsrichtung (und somit quer oder senkrecht zur Längsachse des zu untersuchenden Hohlzylinders) steht.

Bei einer weiteren bevorzugten Ausführungsform umfasst jede Sensoreinheit einen Aufsatz mit mechanischen Verbindungsmitteln zum Befestigen des Aufsatzes an einem Grundkörper dieser Sensoreinheit, wobei der Aufsatz die äußere Optik dieser Sensoreinheit beinhaltet. Um unterschiedliche Messrichtungen zu bewirken, reicht es demnach, verschiedene Aufsätze bei ansonsten identischen Sensoreinheiten zu verwenden. Zudem ist es möglich, dieselben Sensoreinheiten je nach Anwendung mit unterschiedlichen Aufsätzen zu versehen. Der Aufsatz kann als mechanische Verbindungsmittel zum Beispiel ein Schraubgewinde umfassen oder kann so gebildet sein, dass er mittels einer Presspassung am Grundkörper hält. Als Grundkörper kann insbesondere derjenige Teil einer Sensoreinheit angesehen werden, in welchem die für eine konfokale Abbildung notwendigen optischen Elemente aufgenommen sind, während die äußere Optik im Aufsatz im Wesentlichen lediglich eine Strahlumlenkung bewirkt.

Vorzugsweise unterscheiden sich der Aufsatz der ersten Sensoreinheit und der Aufsatz der zweiten Sensoreinheit in der Messrichtung, die durch die jeweilige äußere Optik relativ zu einem Strahlengang innerhalb eines Grundkörpers der jeweiligen Sensoreinheit vorgegeben wird. Beispielsweise können die äußeren Optiken von zwei Aufsätzen durch unterschiedlich geneigte Spiegelflächen gebildet sein. Bis auf die äußere Optik können die verschiedenen Aufsätze identisch sein.

Die Messrichtung der ersten Sensoreinheit und die Messrichtung der zweiten Sensoreinheit stehen vorzugsweise zueinander in einem Winkel von 15° bis 60°, besonders bevorzugt in einem Winkel zwischen 18° und 45°. Dabei kann der Winkel in einer Ebene definiert sein, welcher durch die Bewegungsrichtung und die Messrichtung der ersten Sensoreinheit bestimmt sein; sofern die Messrichtung der zweiten Sensoreinheit nicht in dieser Ebene liegt, wird eine Projektion dieser Messrichtung auf die genannte Ebene für die Bestimmung der Winkelangabe genutzt. Dadurch bleibt ein Rotationswinkel zwischen den Sensoreinheiten um die Messrichtung herum unberücksichtigt.

Bei einer weiteren bevorzugten Ausführungsform ist eine Motoreinrichtung vorgesehen und dazu eingerichtet, die über eine Drehlagerung gehaltene Sensoreinheit für die erste und die zweite Abstandsmessung in verschiedene Drehpositionen zu drehen. Zweckmäßigerweise kann hier eine Halterung, an welcher die Sensoreinheit drehbar gelagert ist, über die Bewegungseinrichtung, insbesondere linear, in einen zu untersuchenden Hohlzylinder eingefahren werden, woraufhin über die Motoreinrichtung die Sensoreinheit innerhalb des zu untersuchenden Hohlraums gedreht werden kann.

Die erste und die zweite Abstandsmessung unterscheiden sich im vorliegenden Text durch die Messrichtungen. Um einen zylindrischen Hohlraum über dessen Höhe zu untersuchen, kann ein Verfahren der Sensoreinheit(en) in Bewegungsrichtung vorgesehen sein, um mehrere erste Abstandsmessungen an verschiedenen Höhen durchzuführen. Ebenso können mehrere zweite Abstandsmessungen durchgeführt
werden. Eine erste und eine zweite Abstandsmessung können insbesondere gleichzeitig erfolgen, wenn hierzu verschiedene Sensoreinheiten genutzt werden. Dabei kann sich die Höhenposition der ersten Abstandsmessung von der Höhenposition der gleichzeitig ausgeführten zweiten Abstandsmessung unterscheiden.

So können die Steuermittel dazu eingerichtet sind,
- mit der Bewegungseinrichtung die mindestens zwei Sensoreinheiten auf verschiedene Höhenpositionen im zylindrischen Hohlraum zu bewegen,
- mehrere erste Abstandsmessungen an verschiedenen Höhenpositionen durchzuführen und mehrere zweite Abstandsmessungen an verschiedenen Höhenpositionen durchzuführen (hierbei können die Höhenpositionen der ersten Abstandsmessungen gleich oder verschieden von den Höhenpositionen der zweiten Abstandsmessungen sein),
- mit Messergebnissen mehrerer erster Abstandsmessungen und unter Berücksichtigung der zugehörigen Höhenpositionen geometrische Abmessungen von Erhebungen der Oberfläche des zylindrischen Hohlraums zu berechnen und
- mit Messergebnissen mehrerer zweiter Abstandsmessungen und unter Berücksichtigung der zugehörigen Höhenpositionen geometrische Abmessungen von Erhebungen der Oberfläche des zylindrischen Hohlraums zu berechnen.

Die berechneten geometrischen Abmessungen können insbesondere einen Überhang einer Erhebung in Bewegungsrichtung betreffen und/oder einen Winkel, in dem die Erhebung hervorsteht. Durch die ersten Abstandsmessungen kann insbesondere ein Überhang einer Erhebung in einer Einfahrrichtung der Sensoreinheit in den zylindrischen Hohlraum untersucht werden; hingegen kann durch die zweiten Abstandsmessungen insbesondere ein Überhang einer Erhebung in einer Ausfahrrichtung der Sensoreinheit untersucht werden.

Im Allgemeinen können Schwankungen oder Vibrationen der beiden Sensoreinheiten quer oder senkrecht zur Bewegungseinrichtung auftreten. Durch solche Vibrationen ändert sich der Abstand der Sensoreinheiten zum Hohlraum. Die Abstandsmessungen werden daher durch solche Vibrationen nachteilig beeinflusst. Es ist daher Bestandteil der Erfindung, solche Vibrationen durch mindestens eine dritte Sensoreinheit zu erfassen. Die Abstandsmessdaten der ersten und zweiten Sensoreinheit können sodann entsprechend den ermittelten Vibrationen korrigiert werden. Die Formulierung "mindestens ein dritte Sensoreinheit" ist so zu verstehen, dass zusätzlich zur ersten und zweiten Sensoreinheit eine oder mehrere weitere Sensoreinheiten vorgesehen sind. Diese ist oder sind für eine optische konfokale Abstandsmessung eingerichtet. Eine Messrichtung der mindestens dritten Sensoreinheit ist relativ zu den Messrichtungen der ersten und zweiten Abstandsmessung in einem Winkel innerhalb einer Ebene senkrecht zur Bewegungsrichtung angeordnet, welcher zwischen 45° und 315° beträgt. Die Steuermittel sind nun dazu eingerichtet, mithilfe von Abstandsmessdaten der mindestens dritten Sensoreinheit Positionsschwankungen der ersten und gegebenenfalls zweiten Sensoreinheit in der Ebene senkrecht zur Bewegungsrichtung zu bestimmen. Vorzugsweise stehen die dritte gegebenenfalls weitere Sensoreinheiten in Winkeln zwischen 90° und 270° zu den Messrichtungen, die bei der ersten und zweiten Abstandsmessung verwendet werden, wobei diese Winkel in der Ebene senkrecht zur Bewegungsrichtung definiert sind. Zusätzlich kann auch ein Neigungswinkel aus dieser Ebene heraus vorliegen. Besonders bevorzugt wird eine vierte Sensoreinheit verwendet. Dabei stehen die Messrichtungen der dritten und vierten Sensoreinheiten in der genannten Ebene bevorzugt ebenfalls in einem Winkel von 90° bis 180° zueinander. Besonders bevorzugt beträgt dieser Winkel 120° und zudem bilden die beiden Messrichtungen dieser zwei Sensoreinheiten jeweils einen Winkel von 120° zu den Messrichtungen der ersten und zweiten Abstandsmessung. Die Messrichtungen der ersten und zweiten Abstandsmessung können in der Ebene senkrecht zur Bewegungsrichtung zueinander ausgerichtet sein, also einen Winkel von 0° bilden. Diese Ausrichtung kann auch bei allen übrigen hier beschriebenen Ausführungsformen vorgesehen sein.

Die dritte und möglicherweise weiteren vorhandenen Sensoreinheiten sind mit der ersten und zweiten Sensoreinheit mechanisch verbunden und werden mit diesen zusammen von der Bewegungseinrichtung bewegt. Somit ist ein Abstand zwischen den genannten Sensoreinheiten bekannt und kann insbesondere starr, also unveränderlich sein. Dies ist wichtig, damit aus Abstandsmessdaten der mindestens dritten Sensoreinheit auf eine Position aller Sensoreinheiten geschlossen werden kann. So werden mit der mindestens dritten Sensoreinheit nacheinander Abstandsmessungen zum zylindrischen Hohlraum durchgeführt, wobei aus Schwankungen in den so gewonnenen Abstandsmessdaten auf Vibrationen zwischen den Sensoreinheiten und dem zylindrischen Hohlraum geschlossen werden kann. Mithilfe dieser Positionsdaten können geometrische Informationen, die durch die erste und/oder zweite Sensoreinheit gewonnen werden, korrigiert werden. Die Messrichtung der mindestens dritten Sensoreinheit kann exakt in der Ebene senkrecht zur Bewegungsrichtung liegen. Alternativ kann die Messrichtung oder können die Messrichtungen der mindestens dritten Sensoreinheit aber auch aus der Ebene senkrecht zur Bewegungsrichtung herausragen, so wie zur ersten und/oder zweiten Sensoreinheit beschrieben. Im Übrigen kann die mindestens dritte Sensoreinheit insbesondere gleich gebildet sein wie die erste und/oder zweite Sensoreinheit.

Die verschiedenen Ausführungsformen der erfindungsgemäßen Sensorvorrichtung sind auch als vorteilhafte Varianten des erfindungsgemäßen Verfahrens anzusehen. Insbesondere ergeben sich Verfahrensvarianten durch den bestimmungsgemäßen Gebrauch der Sensorvorrichtung.

Weitere Vorteile und Merkmale der Erfindung werden nachstehend mit Bezug auf die beigefügten schematischen Figuren beschrieben.
- Fig. 1A: zeigt ein Beispiel einer Sensorvorrichtung des Stands der Technik.
- Fig. 1B: zeigt die Sensorvorrichtung aus Fig. 1A in einer anderen Ausrichtung.
- Fig. 2A: zeigt ein Ausführungsbeispiel einer erfindungsgemäßen Sensorvorrichtung.
- Fig. 2B: zeigt geometrische Angaben zu Fig. 2A.
- Fig. 3: zeigt ein weiteres Ausführungsbeispiel einer erfindungsgemäßen Sensorvorrichtung.
- Fig. 4A: zeigt ein anderes Ausführungsbeispiel einer Sensorvorrichtung in einer ersten Messposition.
- Fig. 4B: zeigt die Sensorvorrichtung aus Fig. 4A in einer zweiten Messposition.

Gleiche und gleich wirkende Bestandteile sind in den Figuren in der Regel mit denselben Bezugszeichen versehen.

Die herkömmliche Sensorvorrichtung 1 aus den Figuren 1A und 1B wurde vorstehend beschrieben. Die dort gemachten Aussagen zu Komponenten der Sensorvorrichtung 1 können auch für Komponenten mit gleichem Bezugszeichen von Ausführungen der erfindungsgemäßen Sensorvorrichtung gelten.

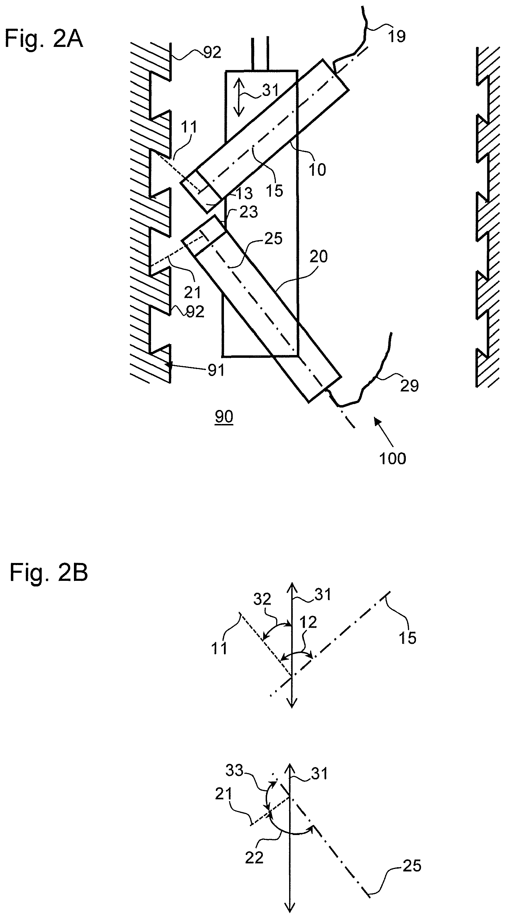

Ein erstes Ausführungsbeispiel einer erfindungsgemäßen Sensorvorrichtung 100 wird im Folgenden mit Bezug auf die Figuren 2A und 2B beschrieben. Fig. 2A zeigt schematisch Komponenten der Sensorvorrichtung 100, welche in einen zu untersuchenden Hohlraum 90 eingefahren sind. Fig. 2B dient der Darstellung bestimmter Winkel zu der Sensorvorrichtung 100 aus Fig. 2A.

Die Sensorvorrichtung 100 umfasst zwei Sensoreinheiten 10 und 20, welche jeweils zum Durchführen einer konfokalen Abstandsmessung eingerichtet sind.

Hierzu verfügt die Sensorvorrichtung 100 über eine oder mehrere Lichtquellen (nicht dargestellt), deren Licht über optische Wellenleiter oder Lichtleitfasern 19 und 29 zu den beiden Sensoreinheiten 10 und 20 geleitet wird. Jede der Sensoreinheiten 10 und 20 umfasst eine Konfokaloptik (beispielsweise eine Linse oder Linsengruppe), welche einen Fokus des ausgesendeten Lichts erzeugt. Die Sensoreinheiten 10 und 20 verfügen zudem jeweils über eine äußere Optik 13 und 23, welche eine Messrichtung 11 und 21 vorgibt, das heißt eine Aussenderichtung für Licht, das von der Konfokaloptik kommt. Das ausgesendete Licht bestrahlt eine Oberfläche 91 des zu untersuchenden Hohlraums 90. Dadurch wird Licht zurückgestreut und/oder reflektiert. Dieses zurückgeworfene Licht wird wiederum über die äußere Optik 13 und 23 sowie die jeweilige Konfokaloptik in Richtung eines hier nicht dargestellten Lichtdetektors weitergeleitet. Beispielsweise kann das zurückgeworfene Licht über die Lichtleitfasern 19 und 29 zu Lichtdetektoren geleitet werden, welche nicht in den zu untersuchenden Hohlraum 90 eingefahren werden.

Es kann vorteilhaft sein, wenn jede Sensoreinheit 10 und 20 über einen Lichtdetektor verfügt, der im länglichen Körper der Sensoreinheit 10 oder 20 aufgenommen ist, während eine Lichtquelle außerhalb der Sensoreinheiten 10 und 20 angeordnet ist und mit diesen über Lichtleitfasern 19 und 29 verbunden ist.

Im Rahmen der vorliegenden Beschreibung kann eine Lichtleitfaser 19, 29 auch als ein Bündel aus mehreren Fasern verstanden werden, welche insbesondere unabhängig voneinander Beleuchtungslicht von der Lichtquelle und nachzuweisendes zurückgeworfenes Licht leiten können.

In Fig. 2A sind die beiden Sensoreinheiten 10 und 20 an einem gemeinsamen Träger angebracht. Dieser kann in der Bewegungsrichtung 31 verfahren werden. Dadurch können die Sensoreinheiten 10 und 20 entlang der Bewegungsrichtung 31 in den zu untersuchenden Hohlraum 90 eingefahren werden und nach erfolgter Untersuchung wieder herausgefahren werden. Dies erfolgt über eine hier nicht dargestellte Bewegungseinrichtung, welche im Messbetrieb außerhalb des zu untersuchenden Hohlraums 90 angeordnet ist. Zweckmäßigerweise entspricht die Bewegungsrichtung 31 gerade der Längsachse oder Zylinderachse des zylindrischen Hohlraums 90.

Als eine wesentliche Idee der Erfindung sind die Messrichtungen 11 und 21 der beiden Sensoreinheiten 10 und 20 so ausgerichtet, dass sie im Messbetrieb nicht senkrecht, sondern schräg auf eine Oberfläche 91 des Hohlraums 90 stehen. Eine Mikrostruktur der Oberfläche 91, das heißt Vertiefungen und/oder Erhebungen der Oberfläche 91, sind in den Figuren zu illustrativen Zwecken vergrößert dargestellt. Die Angabe "senkrecht" soll nicht hinsichtlich einer solchen Mikrostruktur, sondern hinsichtlich eines größeren Bereichs der Oberfläche 91 verstanden werden.

Die beiden Messrichtungen 11 und 21 stehen in einem Winkel zueinander, welcher zwischen 15° und 40°, vorzugsweise zwischen 18° und 30° betragen kann. Dabei ist der Winkel in einer Ebene definiert, welche die Bewegungsrichtung 31 und damit die Zylinderachse umfasst. Eine Drehwinkel zwischen den Messrichtungen 11, 21 um die Zylinderachse herum ist dadurch irrelevant. Grundsätzlich kann bei allen beschriebenen Ausführungsformen ein solcher Drehwinkel gebildet sein.

Die Ausrichtungen der Messrichtungen 11 und 22 aus Fig. 2A werden näher mit Bezug auf Fig. 2B erläutert. Die Sensoreinheit 10 hat eine Längsachse 15, zu welcher die Messrichtung 11 in einem Winkel 12 steht. Die Sensoreinheit 20 weist eine Längsachse 25 auf, zu welcher die Messrichtung 21 in einem Winkel 22 steht. Beim dargestellten Beispiel können die beiden Sensoreinheiten 10 und 20 gleich gebildet sein, womit die Winkel 12 und 22 übereinstimmen können. Die beiden Sensoreinheiten 10 und 20 sind aber zueinander gedreht. Dadurch sind ihre Längsachsen 15 und 25 nicht parallel zueinander und bilden unterschiedliche Winkel zur Bewegungsrichtung 31. Daher steht auch die Messrichtung 11 in einem Winkel 32 zur Messrichtung 31, welcher sich unterscheidet von einem Winkel 33, in welchem die Messrichtung 21 zur Bewegungsrichtung 31 steht. Der Winkel 32 kann zwischen 70° und 85° betragen, während der Winkel 33 zwischen 95° und 110° betragen kann.

Steht eine Messrichtung in dem Winkelbereich wie zu Winkel 32 angegeben, wird eine zugehörige Abstandsmessung auch als eine erste Abstandsmessung bezeichnet. Steht hingegen eine Messrichtung in dem Winkelbereich wie zu Winkel 33 angegeben, so wird eine zugehörige Abstandsmessung als eine zweite Abstandsmessung bezeichnet.

Wie in Fig. 2A dargestellt, ist es mit dieser Ausrichtung möglich, Licht hinter überstehende Vorsprünge 92 der Oberfläche 91 auszusenden und von dort zurückgeworfenes Licht zu empfangen. Dies ist hingegen nicht möglich bei einer Messrichtung, die senkrecht auf die Hohlraumoberfläche 90 steht, wie bei Fig. 1A der Fall.

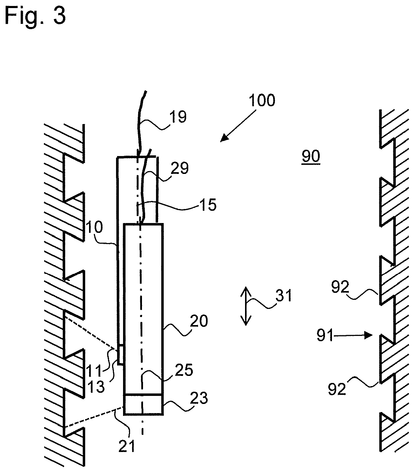

Ein weiteres Ausführungsbeispiel einer erfindungsgemäßen Sensorvorrichtung 100 ist schematisch in Fig. 3 gezeigt. Diese Sensorvorrichtung entspricht weitgehend der in Fig. 2A gezeigten Sensorvorrichtung und unterscheidet sich von dieser in der jeweiligen äußeren Optik 13 und 23 der beiden Sensoreinheiten 10 und 20. Bei Figur 3 weisen die beiden Sensoreinheiten unterschiedliche äußere Optiken 13 und 23 auf, welche verschiedene Lichtablenkrichtungen bewirken. Damit ist bei Fig. 3 ein Winkel 12, der wie zu Fig. 2B erläutert zwischen der Messrichtung 11 und der Längsachse 15 gebildet ist, verschieden von einem Winkel 22, der zwischen der Messrichtung 21 und der Längsachse 25 gebildet ist. Hingegen können die Winkel 32 und 33, die zwischen einer Messrichtung 11, 21 und der Bewegungsrichtung 31 definiert sind, so wie zu Fig. 2B beschrieben sein. Somit stehen bei Fig. 3 die Messrichtungen 11, 12 in verschiedenen Winkeln auf die zu untersuchende Oberfläche 91 und die Bewegungsrichtung 31. Die beiden Längsachsen 15 und 25 können hingegen insbesondere parallel zueinander und/oder parallel zur Bewegungsrichtung 31 angeordnet sein. Dadurch ist der Raumbedarf in einer Ebene senkrecht zur Bewegungsrichtung 31 gering. Anstelle einer parallelen Anordnung sind auch Abweichungen bis beispielsweise 20° möglich, womit weiterhin ein verhältnismäßig geringer Raumbedarf in der genannten Ebene besteht.

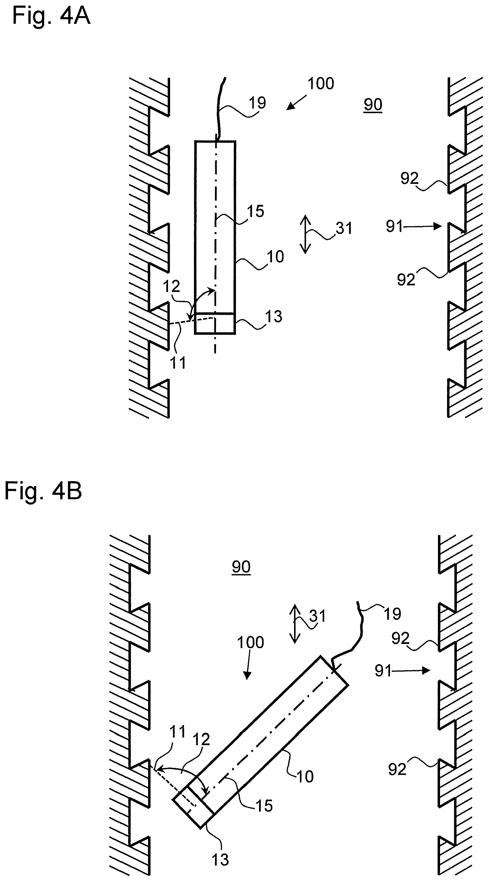

Weitere Sensoreinheiten können zusätzlich zu den beiden dargestellten vorhanden sein. Alternativ ist es aber auch möglich, die beiden oben beschriebenen Messrichtungen 11 und 21 nacheinander mit einer einzigen Sensoreinheit 10 einzustellen. Dies ist bei einem weiteren Ausführungsbeispiel der Sensorvorrichtung 100 der Fall, welche in zwei verschiedenen Einstellungen in den Figuren 4A und 4B gezeigt ist.

Die Sensorvorrichtung 100 umfasst wiederum eine Sensoreinheit 10, deren äußere Optik 13 eine Messrichtung 11 relativ zur Längsachse 15 dieser Sensoreinheit 10 vorgibt. Ein Winkel 12 zwischen der Messrichtung 11 und der Längsachse 15 ist hier größer 90° und liegt vorzugsweise zwischen 100° und 250°.

Darin unterscheidet sich diese Sensoreinheit 10 von der bekannten Sensoreinheit aus Fig. 1A, bei welcher die Messrichtung senkrecht zur Längsachse steht. Durch einen Winkel zwischen 98° und 110° kann, wie in Fig. 4A dargestellt, hinter überstehende Vorsprünge 92 gemessen werden, ohne dass ein der äußeren Optik 13 gegenüberliegendes Ende der länglichen Sensoreinheit 10 zu der zu untersuchenden Oberfläche 90 hin geneigt werden müsste, wie es bei Fig. 1B der Fall ist.

Die Sensoreinheit 10 aus Fig. 4A ist nun drehbar gelagert, wobei die Drehachse quer oder senkrecht zur Bewegungsrichtung 31 steht. Dadurch kann die Sensoreinheit in eine Drehposition gebracht werden, wie in Fig. 4B dargestellt. In dieser Drehposition ist eine erste Abstandsmessung möglich, wohingegen mit der Drehposition aus Fig. 4A eine zweite Abstandsmessung möglich ist. Vorteilhafterweise können somit durch eine einzige Sensoreinheit 10 die beiden oben näher beschriebenen Abstandsmessungen erfolgen.

Zusätzlich zu den hier dargestellten Sensoreinheiten 10, 20 kann die Sensorvorrichtung 100 auch weitere Sensoreinheiten umfassen, deren Messrichtung sich von den Messrichtungen 11, 21 in einer Ebene senkrecht zur Bewegungsrichtung 31 unterscheidet. Diese weiteren Sensoreinheiten dienen der Positionskontrolle der Sensoreinheiten 10 und 20. So messen die weiteren Sensoreinheiten jeweils einen Abstand zum zylindrischen Hohlraum, wobei aus Schwankungen dieser gemessenen Abstände auf Vibrationen aller Sensoreinheiten relativ zum zylindrischen Hohlraum geschlossen werden kann. Die Kenntnis dieser Vibrationen kann genutzt werden, um Messdaten der ersten und zweiten Abstandsmessung der Sensoreinheiten 10, 20 zu korrigieren.

Mit der erfindungsgemäßen Sensorvorrichtung 100 wird vorteilhafterweise erreicht, dass wertvolle geometrische Informationen über unebene Oberflächen eines Hohlraums, insbesondere eines zylindrischen Hohlraums, gewonnen werden können.

## Patentansprüche

1. Sensorvorrichtung zur Oberflächenuntersuchung eines zylindrischen Hohlraums (90)
- mit mindestens zwei Sensoreinheiten (10, 20), welche jeweils für eine optische konfokale Abstandsmessung eingerichtet sind,
- wobei die mindestens zwei Sensoreinheiten (10, 20) zumindest eine erste und eine zweite Sensoreinheit (10, 20) umfassen,
- wobei die mindestens zwei Sensoreinheiten (10, 20) jeweils eine Lichtquelle und einen Lichtdetektor, oder einen optischen Wellenleiter aufweisen und
- wobei die mindestens zwei Sensoreinheiten (10, 20) jeweils eine längliche Form haben und eine äußere Optik (13, 23) aufweisen, durch welche jeweils eine Messrichtung (11, 21), in welcher Licht aussendbar und empfangbar ist, quer zu einer Längsachse der jeweiligen Sensoreinheit (10, 20) steht,
- mit einer Bewegungseinrichtung, welche dazu eingerichtet ist, die mindestens zwei Sensoreinheiten (10, 20) in einer Bewegungsrichtung (31) in einen zu untersuchenden zylindrischen Hohlraum (90) ein- und auszufahren,
**dadurch gekennzeichnet,**
- **dass** zur Vermessung von Erhebungen einer Oberfläche des zylindrischen Hohlraums (90) Steuermittel vorgesehen und dazu eingerichtet sind, die erste Sensoreinheit (10) zum Durchführen einer ersten Abstandsmessung anzusteuern, bei welcher die Messrichtung (11) relativ zur Bewegungsrichtung (31) in einem Winkel (32) von 20° bis 85° steht, und die zweite Sensoreinheit (20) zum Durchführen einer zweiten Abstandsmessung anzusteuern, bei welcher die Messrichtung (21) relativ zur Bewegungsrichtung (31) in einem Winkel (33) von 95° bis 160° steht,
- **dass** die erste Sensoreinheit (10) so gestaltet und mit der Bewegungseinrichtung verbunden ist, dass ihre Messrichtung (11) relativ zur Bewegungsrichtung (31) in einem Winkel (32) von 20° bis 85° steht,
**dass** die zweite Sensoreinheit (20) so gestaltet und mit der Bewegungseinrichtung verbunden ist, dass ihre Messrichtung (21) relativ zur Bewegungsrichtung (31) in einem Winkel (33) von 95° bis 160° steht,
**dass** mindestens eine dritte Sensoreinheit vorgesehen ist, welche für eine optische konfokale Abstandsmessung eingerichtet ist,
**dass** eine Messrichtung der mindestens dritten Sensoreinheit relativ zu den Messrichtungen (11,21)der ersten und zweiten Abstandsmessung einen Winkel innerhalb einer Ebene senkrecht zur Bewegungsrichtung (31) bildet, welcher zwischen 45° und 315° beträgt,
**dass** die Steuermittel dazu eingerichtet sind, mithilfe von Abstandsmessdaten der mindestens dritten Sensoreinheit Positionsschwankungen der ersten und zweiten Sensoreinheit (10, 20) in der Ebene senkrecht zur Bewegungsrichtung (31) zu bestimmen.

2. Sensorvorrichtung nach Anspruch 1,
**dadurch gekennzeichnet,**
**dass** die erste Sensoreinheit (10) so gestaltet ist, dass ihre Messrichtung (11, 21) relativ zu ihrer Längsachse in einem Winkel von 20° bis 85° steht,
**dass** die zweite Sensoreinheit (20) so gestaltet ist, dass ihre Messrichtung (11, 21) relativ zu ihrer Längsachse in einem Winkel von 95° bis 160° steht.

3. Sensorvorrichtung nach Anspruch 1 oder 2,
**dadurch gekennzeichnet,**
**dass** die erste und die zweite Sensoreinheit (10, 20) mit ihren Längsachsen im Wesentlichen parallel zueinander angeordnet sind und ihre Längsachsen im Wesentlichen parallel zur Bewegungsrichtung (31) ausgerichtet sind.

4. Sensorvorrichtung nach einem der Ansprüche 1 bis 3,
**dadurch gekennzeichnet,**
**dass** die erste und zweite Sensoreinheit (10, 20) gleich gebildet sind und zueinander gedreht angeordnet sind.

5. Sensorvorrichtung nach einem der Ansprüche 1 bis 4,
**dadurch gekennzeichnet,**
**dass** jede Sensoreinheit (10, 20) einen Aufsatz mit mechanischen Verbindungsmitteln zum Befestigen des Aufsatzes an einem Grundkörper dieser Sensoreinheit (10, 20) aufweist und
**dass** der Aufsatz die äußere Optik (13, 23) dieser Sensoreinheit (10, 20) umfasst.

6. Sensorvorrichtung nach Anspruch 5,
**dadurch gekennzeichnet,**
**dass** sich der Aufsatz der ersten Sensoreinheit (10) und der Aufsatz der zweiten Sensoreinheit (20) in der Messrichtung (11, 21), die durch die jeweilige äußere Optik (13, 23) vorgegeben wird, unterscheiden.

7. Sensorvorrichtung nach einem der Ansprüche 1 bis 6,
**dadurch gekennzeichnet,**
**dass** die Messrichtung (11) der ersten Sensoreinheit (10) und die Messrichtung (21) der zweiten Sensoreinheit (20) zueinander einen Winkel von 15° bis 40° bilden.

8. Sensorvorrichtung nach einem der Ansprüche 1 bis 7,
**dadurch gekennzeichnet,**
**dass** eine Antriebseinrichtung vorgesehen und dazu eingerichtet ist, mindestens eine über eine drehbare Lagerung gehaltene Sensoreinheit (10, 20) für die erste und zweite Abstandsmessung in verschiedene Drehpositionen zu drehen.

9. Sensorvorrichtung nach einem der Ansprüche 1 bis 8,
**dadurch gekennzeichnet,**
**dass** die Steuermittel weiterhin dazu eingerichtet sind,
- mit der Bewegungseinrichtung die mindestens zwei Sensoreinheiten (10, 20) auf verschiedene Höhenpositionen im zylindrischen Hohlraum (90) zu bewegen,
- mehrere erste Abstandsmessungen an verschiedenen Höhenpositionen durchzuführen und mehrere zweite Abstandsmessungen an verschiedenen Höhenpositionen durchzuführen,
- mit Messergebnissen mehrerer erster Abstandsmessungen und unter Berücksichtigung der zugehörigen Höhenpositionen geometrische Abmessungen von Erhebungen der Oberfläche des zylindrischen Hohlraums (90) zu berechnen und
- mit Messergebnissen mehrerer zweiter Abstandsmessungen und unter Berücksichtigung der zugehörigen Höhenpositionen geometrische Abmessungen von Erhebungen der Oberfläche des zylindrischen Hohlraums (90) zu berechnen.

10. Verfahren zur Oberflächenuntersuchung eines zylindrischen Hohlraums (90), bei welchem zumindest die folgenden Schritte ausgeführt werden:
- Einfahren von mindestens zwei Sensoreinheiten (10, 20) entlang einer Bewegungsrichtung (31) in einen zu untersuchenden zylindrischen Hohlraum (90),
- Jeweiliges Durchführen von optischen konfokalen Abstandsmessungen durch die mindestens zwei Sensoreinheiten (10, 20), welche jeweils für die optische konfokale Abstandsmessung über eine äußere Optik (13, 23) Licht in einer Messrichtung (11, 21) aussendet und Licht aus der Messrichtung (11, 21) empfängt,
- wobei die mindestens zwei Sensoreinheiten (10, 20) zumindest eine erste Sensoreinheit (10) und eine zweite Sensoreinheit (20) umfassen, und jeweils eine Lichtquelle und einen Lichtdetektor, oder einen optischen Wellenleiter aufweisen,
- wobei die mindestens zwei Sensoreinheiten (10, 20) eine längliche Form haben und die jeweilige Messrichtung (11, 21) quer zu einer Längsachse der jeweiligen Sensoreinheit (10, 20) steht,
- Herausfahren der mindestens zwei Sensoreinheiten (10, 20) entlang der Bewegungsrichtung (31) aus dem zu untersuchenden zylindrischen Hohlraum (90),
**dadurch gekennzeichnet,**
**dass** das Durchführen der jeweiligen optischen konfokalen Abstandsmessungen umfasst:
- Durchführen einer ersten Abstandsmessung durch die erste Sensoreinheit (10) zur Vermessung von Erhebungen einer Oberfläche des zylindrischen Hohlraums (90), wobei die Messrichtung (11) bei der ersten Abstandsmessung relativ zur Bewegungsrichtung (31) in einem Winkel (32) von 20° bis 85° steht,
- Durchführen einer zweiten Abstandsmessung durch die zweite Sensoreinheit (20) zur Vermessung von Erhebungen einer Oberfläche des zylindrischen Hohlraums (90), wobei die Messrichtung (21) bei der zweiten Abstandsmessung relativ zur Bewegungsrichtung (31) in einem Winkel (33) von 95° bis 160° steht,
- wobei zum Bereitstellen der zur ersten und zweiten Abstandsmessung genannten Winkel:
- die erste Sensoreinheit (10) so gestaltet und mit der Bewegungseinrichtung verbunden ist, dass ihre Messrichtung (11) relativ zur Bewegungsrichtung (31) in einem Winkel (32) von 20° bis 85° steht, und
- die zweite Sensoreinheit (20) so gestaltet und mit der Bewegungseinrichtung verbunden ist, dass ihre Messrichtung (21) relativ zur Bewegungsrichtung (31) in einem Winkel (33) von 95° bis 160° steht,
- Durchführen einer optischen konfokalen Abstandsmessung mit mindestens einer dritten Sensoreinheit,
wobei eine Messrichtung der mindestens dritten Sensoreinheit relativ zu den Messrichtungen (11,21) der ersten und zweiten Abstandsmessung einen Winkel innerhalb einer Ebene senkrecht zur Bewegungsrichtung (31) bildet, welcher zwischen 45° und 315° beträgt,
- Bestimmen von Positionsschwankungen der ersten und zweiten Sensoreinheit (10, 20) in der Ebene senkrecht zur Bewegungsrichtung (31) mithilfe von Abstandsmessdaten der mindestens dritten Sensoreinheit.

## Claims

1. A sensor device for the examination of the surface of a cylindrical hollow enclosure (90)
- having at least two sensor units (10, 20), which are in each case set up for an optical confocal distance measurement,
- wherein the at least two sensor units (10, 20) comprise at least one first sensor unit and at least one second sensor unit (10, 20),
- wherein the at least two sensor units (10, 20) have in each case a light source and a light detector, or an optical waveguide and
- wherein the at least two sensor units (10, 20) in each case have an elongated shape and contain an external optical system (13, 23), through which in each case a measuring direction (11, 21), in which light can be irradiated and be received, stands transverse to a longitudinal axis of the respective sensor unit (10, 20),
- having a motion device, which is adapted to move the at least two sensor units (10, 20) in one direction of motion (31) into and out of a cylindrical hollow enclosure (90) to be examined,
**characterized in that**
- control means are provided for measuring protrusions on a surface of the cylindrical hollow enclosure (90) and are adapted to control the first sensor unit (10) for carrying out a first distance measurement, during which the measuring direction (11) relative to the direction of motion (31) is at an angle (32) from 20° to 85°, and are adapted to control the second sensor unit (20) for carrying out a second distance measurement, during which the measuring direction (21) relative to the direction of motion (31) is at an angle (33) from 95° to 160°,
- that the first sensor unit (10) is formed in such a manner and linked with the movement mechanism that its measuring direction (11) relative to the direction of motion (31) is at an angle (32) from 20° to 85°,
- that the second sensor unit (20) is formed and linked with the movement mechanism in such a manner that its measuring direction (21) relative to the direction of motion (31) is at an angle (33) from 95° to 160°,
- that at least one third sensor unit is provided, which is set for an optical confocal distance measurement,
- that a measuring direction of said at least third sensor unit forms, relatively to the measuring directions (11, 21) of the first and second distance measurements, an angle within a plane at right angles to the direction of motion (31), which measures between 45° and 315°,
- that the control means are adapted to determine variations in position of the first and second sensor unit (10, 20) in a plane at right angles to the direction of motion (31) with the aid of distance measurement data of the at least third sensor unit.

2. A sensor device according to claim 1,
**characterized in that**
the first sensor unit (10) is formed in such a manner that its measuring direction (11, 21) relative to its longitudinal axis is at an angle from 20° to 85°,
that the second sensor unit (20) is formed in such a manner that its measuring direction (11, 21) relative to its longitudinal axis is at an angle from 95° to 160°.

3. A sensor device according to claim 1 or claim 2,
**characterized in that**
the first and second sensor units (10, 20) with their longitudinal axes are disposed substantially parallel to each other and their longitudinal axes are oriented substantially parallel to the direction of motion (31).

4. A sensor device according to any one of claims 1 to 3,
**characterized in that**
the first and second sensor units (10, 20) are identically formed and are disposed rotated to each other.

5. A sensor device according to any one of claims 1 to 4,
**characterized in that**
each sensor unit (10, 20) has a superstructure with mechanical connecting means for the attachment of the superstructure to a base element of said sensor unit (10, 20) and
that the superstructure contains the external optical system (13, 23) of said sensor unit (10, 20).

6. A sensor device according to claim 5,
**characterized in that**
the superstructure of the first sensor unit (10) and the superstructure of the second sensor unit (20) differ as to the measuring direction (11, 21), which is specified by the respective external optical system (13, 23).

7. A sensor device according to any one of claims 1 to 6,
**characterized in that**
the measuring direction (11) of the first sensor unit (10) and the measuring direction (21) of the second sensor unit (20) form an angle from 15° to 40° to each other.

8. A sensor device according to any one of claims 1 to 7,
**characterized in that**
a driving system is provided and is adapted to rotate at least one sensor unit (10, 20), mounted on a rotatable bearing, in different rotary positions for the first and second distance measurement.

9. A sensor device according to any one of claims 1 to 8,
**characterized in that**
the control means are further adapted thereto
- to move the at least two sensor units (10, 20) to different height positions in the cylindrical hollow enclosure (90) by means of the movement mechanism,
- to carry out a plurality of first distance measurements at different height positions and to carry out a plurality of second distance measurements at different height positions,
- to calculate geometrical dimensions of protrusions of the surface of the cylindrical hollow enclosure (90) using measurement results of a plurality of first distance measurements while taking into consideration the appertaining height positions and
- to calculate geometrical dimensions of protrusions of the surface of the cylindrical hollow enclosure (90)using measurement results of a plurality of second distance measurements while taking into consideration the appertaining height positions.

10. A method of examining the surface of a cylindrical hollow enclosure (90), in which at least the following steps are carried out:
- moving-in at least two sensor units (10, 20) along a direction of motion (31) into a cylindrical hollow enclosure (90) to be examined,
- carrying out optical confocal distance measurements respectively by means of each of the at least two sensor units (10, 20), which in each case, for the optical confocal distance measurement, emits light in a measuring direction (11, 21) via an external optical system (13, 23) and receives light from said measuring direction (11, 21),
- wherein the at least two sensor units (10, 20) comprise at least one first sensor unit (10) and one second sensor unit (20) and in each case exhibit a light source and a light detector, or an optical waveguide,
- wherein the at least two sensor units (10, 20) have an elongated shape and the respective measuring direction (11, 21) is disposed transversely to a longitudinal axis of the respective sensor unit (10, 20),
- moving-out the at least two sensor units (10, 20) along said direction of motion (31) out of the cylindrical hollow enclosure (90) to be examined, **characterized in that**
the execution of the respective optical confocal distance measurements involves:
- carrying out a first distance measurement by means of the first sensor unit (10) for measuring protrusions of a surface of the cylindrical hollow enclosure (90), wherein the measuring direction (11) during the first distance measurement is at an angle (32) from 20° to 85° relative to the direction of motion (31),
- carrying out a second distance measurement by means of the second sensor unit (20) for measuring protrusions of a surface of the cylindrical hollow enclosure (90), wherein the measuring direction (21) during the second distance measurement is at an angle (33) from 95° to 160° relative to the direction of motion (31),
- wherein for providing the angles named for the first and second distance measurement:
- the first sensor unit (10) is formed such and connected to the motion device that their measurement direction (11) is relative to the motion direction (31) in an angle (32) from 20° to 85°, and
- the second sensor unit (20) is formed such and connected to the motion device that their measurement direction (21) is relative to the motion direction (31) in an angle (33) from 95° to 160°,
- carrying out an optical confocal distance measurement with at least one third sensor unit wherein a measuring direction of the at least third sensor unit forms, relatively to the measuring directions (11, 21) of the first and second distance measurement, an angle within a plane at right angles to the direction of motion (31), which angle is between 45° and 315°,
- determining position deviations of the first and second sensor units (10, 20) in the plane at right angles to the direction of motion (31) with the aid of measured distance data produced by the at least third sensor unit.

## Revendications

1. Dispositif capteur pour l'inspection de surface d'un espace creux cylindrique (90)
- avec au moins deux unités de détection (10, 20) qui sont conçues chacune pour une mesure de distance confocale optique,
- les au moins deux unités de détection (10, 20) comprenant au moins une première et une deuxième unité de détection (10, 20),
- les au moins deux unités de détection (10, 20) présentant chacune une source de lumière et un détecteur de lumière, ou un guide d'onde optique et
- les au moins deux unités de détection (10, 20) ayant chacune une forme allongée et présentant chacune une optique externe (13, 23) par laquelle à chaque fois une direction de mesure (11, 21), dans laquelle de la lumière peut être émise et reçue, est disposée transversalement à un axe longitudinal de l'unité de détection (10, 20) respective,
- avec un appareil de déplacement, qui est conçu pour avancer et reculer les au moins deux unités de détection (10, 20) dans une direction de déplacement (31) dans un espace creux cylindrique (90) à inspecter,
**caractérisé en ce que**
- pour la mesure de surélévations d'une surface de l'espace creux cylindrique (90), des moyens de commande sont prévus et conçus pour amener la première unité de détection (10) à exécuter une première mesure de distance au cours de laquelle la direction de mesure (11) est disposée relativement à la direction de déplacement (31) selon un angle (32) de 20° à 85°, et la deuxième unité de détection (20) à exécuter une seconde mesure de distance au cours de laquelle la direction de mesure (21) est disposée relativement à la direction de déplacement (31) selon un angle (33) de 95° à 160°,
- **en ce que** la première unité de détection (10) est agencée et reliée à l'appareil de déplacement de sorte que sa direction de mesure (11) soit disposée relativement à la direction de déplacement (31) selon un angle (32) de 20° à 85°,
**en ce que** la deuxième unité de détection (20) est agencée et reliée à l'appareil de déplacement de sorte que sa direction de mesure (21) soit disposée relativement à la direction de déplacement (31) selon un angle (33) de 95° à 160°,
**en ce qu'**il est prévu au moins une troisième unité de détection qui est conçue pour une mesure de distance confocale optique,
**en ce qu'**une direction de mesure de l'au moins troisième unité de détection relativement aux directions de mesure (11, 21) des première et deuxième mesures de distance forme perpendiculairement à la direction de déplacement (31) un angle à l'intérieur d'un plan, lequel est entre 45° et 315°,
**en ce que** les moyens de commande sont conçus pour déterminer, à l'aide de données de mesure de distance de l'au moins troisième unité de détection, des fluctuations de position des première et deuxième unités de détection (10, 20) dans le plan perpendiculairement à la direction de déplacement (31).

2. Dispositif capteur selon la revendication 1,
**caractérisé en ce que**
la première unité de détection (10) est agencée de sorte que sa direction de mesure (11,21) soit disposée relativement à son axe longitudinal selon un angle de 20° à 85°, **en ce que** la deuxième unité de détection (20) est agencée de sorte que sa direction de mesure (11, 21) soit disposée relativement à son axe longitudinal selon un angle de 95° à 160°.

3. Dispositif capteur selon la revendication 1 ou 2,
**caractérisé en ce que**
les première et deuxième unités de détection (10, 20) sont disposées avec leurs axes longitudinaux sensiblement parallèles l'une à l'autre et leurs axes longitudinaux sont orientés sensiblement parallèles à la direction de déplacement (31).

4. Dispositif capteur selon l'une des revendications 1 à 3,
**caractérisé en ce que**
les première et deuxième unités de détection (10, 20) sont formées de manière identique et sont disposées tournées l'une vers l'autre.

5. Dispositif capteur selon l'une des revendications 1 à 4,
**caractérisé en ce que**
chaque unité de détection (10, 20) présente un embout avec des moyens de liaison mécaniques pour fixer l'embout à un corps de base de cette unité de détection (10, 20) et
**en ce que** l'embout comprend l'optique externe (13, 23) de cette unité de détection (10, 20).

6. Dispositif capteur selon la revendication 5,
**caractérisé en ce que**
l'embout de la première unité de détection (10) et l'embout de la deuxième unité de détection (20) se différencient au niveau de la direction de mesure (11, 21) qui est spécifiée par l'optique externe (13, 23) respective.

7. Dispositif capteur selon l'une des revendications 1 à 6,
**caractérisé en ce que**
la direction de mesure (11) de la première unité de détection (10) et la direction de mesure (21) de la deuxième unité de détection (20) forment l'une par rapport à l'autre un angle de 15° à 40°.

8. Dispositif capteur selon l'une des revendications 1 à 7,
**caractérisé en ce que**
un appareil d'entraînement est prévu et conçu pour tourner au moins une unité de détection (10, 20) maintenue par un support rotatif pour la première et la seconde mesure de distance dans diverses positions de rotation.

9. Dispositif capteur selon l'une des revendications 1 à 8,
**caractérisé en ce que**
les moyens de commande sont en outre conçus
- pour déplacer, avec l'appareil de déplacement, les au moins deux unités de détection (10, 20) à diverses positions en hauteur dans l'espace creux cylindrique (90),
- pour exécuter plusieurs premières mesures de distance à diverses positions en hauteur et pour exécuter plusieurs secondes mesures de distance à diverses positions en hauteur,
- pour calculer, avec des résultats de mesure de plusieurs premières mesures de distance et en tenant compte des positions en hauteur associées, des dimensions géométriques de surélévations de la surface de l'espace creux cylindrique (90) et
- pour calculer, avec des résultats de mesure de plusieurs secondes mesures de distance et en tenant compte des positions en hauteur associées, des dimensions géométriques de surélévations de la surface de l'espace creux cylindrique (90).

10. Procédé d'inspection de surface d'un espace creux cylindrique (90), dans lequel au moins les étapes suivantes sont effectuées :
- entrée d'au moins deux unités de détection (10, 20) le long d'une direction de déplacement (31) dans un espace creux cylindrique (90) à inspecter,
- exécution respective de mesures de distance confocales optiques par les au moins deux unités de détection (10, 20) dont chacune émet, pour la mesure de distance confocale optique, par le biais d'une optique externe (13, 23) de la lumière dans une direction de mesure (11, 21) et reçoit de la lumière depuis la direction de mesure (11,21),
- dans lequel les au moins deux unités de détection (10, 20) comprennent au moins une première unité de détection (10) et une deuxième unité de détection (20), et présentent chacune une source de lumière et un détecteur de lumière, ou un guide d'onde optique,
- dans lequel les au moins deux unités de détection (10, 20) ont une forme allongée et la direction de mesure (11, 21) respective est disposée transversalement à un axe longitudinal de l'unité de détection (10, 20) respective,
- la sortie des au moins deux unités de détection (10, 20) le long de la direction de déplacement (31) en dehors de l'espace creux cylindrique (90) à inspecter,
**caractérisé en ce que**
l'exécution des mesures de distance confocales optiques respectives comprend :
- une exécution d'une première mesure de distance par la première unité de détection (10) pour la mesure de surélévations d'une surface de l'espace creux cylindrique (90), dans lequel la direction de mesure (11) lors de la première mesure de distance est disposée relativement à la direction de déplacement (31) selon un angle (32) de 20° à 85°,
- une exécution d'une seconde mesure de distance par la deuxième unité de détection (20) pour la mesure de surélévations d'une surface de l'espace creux cylindrique (90), dans lequel la direction de mesure (21) lors de la seconde mesure de distance est disposée relativement à la direction de déplacement (31) selon un angle (33) de 95° à 160°,
- dans lequel pour la fourniture de l'angle mentionné pour la première et la seconde mesure de distance :
- la première unité de détection (10) est agencée et reliée à l'appareil de déplacement de sorte que sa direction de mesure (11) soit disposée relativement à la direction de déplacement (31) selon un angle (32) de 20° à 85°, et
- la deuxième unité de détection (20) est agencée et reliée à l'appareil de déplacement de sorte que sa direction de mesure (21) soit disposée relativement à la direction de déplacement (31) selon un angle (33) de 95° à 160°,
- une exécution d'une mesure de distance confocale optique avec au moins une troisième unité de détection,
dans lequel une direction de mesure de l'au moins troisième unité de détection relativement aux directions de mesure (11, 21) des première et seconde mesures de distance forme perpendiculairement à la direction de déplacement un angle à l'intérieur d'un plan (31), lequel est entre 45° et 315°,
- une détermination de fluctuations de position des première et deuxième unités de détection (10, 20) dans le plan perpendiculairement à la direction de déplacement (31) à l'aide de données de mesure de distance de l'au moins troisième unité de détection.
